# EUROPEAN PATENT APPLICATION

(11) **EP 4 513 993 A1**
(43) Date of publication of application: **26.02.2025**
(21) Application number: 22938582.8
(22) Date of filing: 22.04.2022
(51) Int. Cl.: H04W 60/02, H04W 4/40, H04W 64/00

(54) **TERMINAL AND POSITIONING METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/018631
(87) International publication number: WO 2023/203783

(57) **Abstract**

A terminal includes: a reception unit configured to receive, from a first terminal, a signal requesting position information of the terminal in inter-terminal direct communication; and a transmitting unit configured to transmit, to a second terminal, a signal related to position measurement in the inter-terminal direct communication, wherein the reception unit receives, from the second terminal, a signal that is obtained based on the signal related to the position measurement in the inter-terminal direct communication, and the transmitting unit transmits, to the first terminal, the position information of the terminal obtained based on the signal that is obtained based on the signal related to the position measurement in the inter-terminal direct communication.

## Description

### Technical Field

The present invention relates to a terminal and a positioning method in a wireless communication system.

### Background Art

In long term evolution (LTE) and a succeeding system of LTE (for example, LTE advanced (LTE-A) and new radio (NR) (also referred to as 5G)), a study has been conducted on a device to device (D2D) technology in which terminals perform direct communication without passing through a base station (for example, Non Patent Literature 1).

D2D reduces traffic between a terminal and a base station, and enables communication between terminals even when the base station becomes incommunicable at the time of disaster or the like. It is noted that, in the 3rd generation partnership project (3GPP), D2D is referred to as a "sidelink", but in the present specification, D2D, which is a more general term, is used. However, a sidelink is also used as necessary in the description of the embodiment to be described later.

D2D communication is roughly divided into D2D discovery for discovering other communicable terminals and D2D communication (also referred to as D2D direct communication, inter-terminal direct communication, or the like) for performing direct communication between terminals. Hereinafter, when the D2D communication, the D2D discovery, and the like are not particularly distinguished, they are simply referred to as D2D. Further, a signal transmitted and received by D2D is referred to as a D2D signal. A study has been conducted on various use cases of services related to vehicle to everything (V2X) in NR (for example, Non Patent Literature 2).

### Citation List

### Non Patent Literature

Non Patent Literature 1: 3GPP TS 38.211 V16.8.0(2021-12)
Non Patent Literature 2: 3GPP TR 22.886 V15.1.0(2017-03)
Non Patent Literature 3: 3GPP TS 38.305 V16.7.0(2021-12)
Non Patent Literature 4: 3GPP TS 38.455 V16.6.0(2021-12)
Non Patent Literature 5: 3GPP TS 37.355 V16.7.0(2021-12)
Non Patent Literature 6: 3GPP TS 23.032 V16.1.0(2021-12)
Non Patent Literature 7: 3GPP TS 38.215 V16.4.0(2020-12)

### Summary of Invention

### Technical Problem

Position measurement has been studied in scenarios of inter-terminal direct communication, for example, in-coverage, partial-coverage, and out-of-coverage, vehicle to everything (V2X), public safety, commercial, and Industrial Internet of Things (IIOT), and the like. However, a method of acquiring position information of another device is not clear.

The present invention has been made in view of the above-described points, and an object of the present invention is to acquire position information of another device by inter-terminal direct communication.

### Solution to Problem

According to the disclosed technology, there is provided a terminal including: a reception unit configured to receive, from a first terminal, a signal requesting position information of the terminal in inter-terminal direct communication; and a transmitting unit configured to transmit, to a second terminal, a signal related to position measurement in the inter-terminal direct communication, wherein the reception unit receives, from the second terminal, a signal that is obtained based on the signal related to the position measurement in the inter-terminal direct communication, and the transmitting unit transmits, to the first terminal, the position information of the terminal obtained based on the signal that is obtained based on the signal related to the position measurement in the inter-terminal direct communication.

### Advantageous Effects of Invention

According to the disclosed technology, it is possible to acquire position information of another device by inter-terminal direct communication.

### Brief Description of Drawings

[Fig. 1] Fig. 1 is a diagram illustrating a wireless communication system.
[Fig. 2] Fig. 2 is a diagram illustrating V2X.
[Fig. 3] Fig. 3 is a diagram illustrating an example of communication in D2D.
[Fig. 4] Fig. 4 is a diagram illustrating an example (1) of position measurement.
[Fig. 5] Fig. 5 is a diagram illustrating an example of measuring DL-RSTD.
[Fig. 6] Fig. 6 is a diagram illustrating an example of measuring UL-RTOA.
[Fig. 7] Fig. 7 is a diagram illustrating an example (2) of position measurement.
[Fig. 8] Fig. 8 is a diagram illustrating an example of measuring RTT.
[Fig. 9] Fig. 9 is a flowchart illustrating an example (1) of position estimation according to an embodiment of the present invention.
[Fig. 10] Fig. 10 is a diagram illustrating the example (1) of position estimation according to the embodiment of the present invention.
[Fig. 11] Fig. 11 is a diagram illustrating an arrangement example of a reference signal according to the embodiment of the present invention.
[Fig. 12] Fig. 12 is a flowchart illustrating an example (2) of position estimation according to the embodiment of the present invention.
[Fig. 13] Fig. 13 is a diagram illustrating the example (2) of position estimation according to the embodiment of the present invention.
[Fig. 14] Fig. 14 is a flowchart illustrating an example (3) of position estimation according to the embodiment of the present invention.
[Fig. 15] Fig. 15 is a diagram illustrating the example (3) of position estimation according to the embodiment of the present invention.
[Fig. 16] Fig. 16 is a flowchart illustrating an example (4) of position estimation according to the embodiment of the present invention.
[Fig. 17] Fig. 17 is a diagram illustrating the example (4) of position estimation according to the embodiment of the present invention.
[Fig. 18] Fig. 18 is a flowchart illustrating an example (5) of position estimation according to the embodiment of the present invention.
[Fig. 19] Fig. 19 is a diagram illustrating the example (5) of position estimation according to the embodiment of the present invention.
[Fig. 20] Fig. 20 is a diagram illustrating an example (1) of reporting position information according to the embodiment of the present invention.
[Fig. 21] Fig. 21 is a diagram illustrating an example (2) of reporting position information according to the embodiment of the present invention.
[Fig. 22] Fig. 22 is a diagram illustrating an example of a functional configuration of a base station 10 according to the embodiment of the present invention.
[Fig. 23] Fig. 23 is a diagram illustrating an example of a functional configuration of a terminal 20 according to the embodiment of the present invention.
[Fig. 24] Fig. 24 is a diagram illustrating an example of a hardware configuration of the base station 10 or the terminal 20 according to the embodiment of the present invention.
[Fig. 25] Fig. 25 is a diagram illustrating an example of a configuration of a vehicle 2001 according to the embodiment of the present invention.

### Description of Embodiments

Hereinafter, an embodiment of the present invention will be described with reference to the drawings. It is noted that the embodiment described below is an example, and the embodiment to which the present invention is applied is not limited to the following embodiment.

In the operation of a wireless communication system of the embodiment of the present invention, an existing technology is appropriately used. However, the existing technology is, for example, existing LTE, but is not limited to the existing LTE. In addition, the term "LTE" used in the present specification has a broad meaning including LTE-Advanced and LTE-Advanced or later systems (for example, NR) or a wireless local area network (LAN), unless otherwise specified.

In the embodiment of the present invention, a duplex system may be a time division duplex (TDD) system, a frequency division duplex (FDD) system, or other (for example, flexible duplex or the like) systems.

In addition, in the embodiment of the present invention, a description indicating that a radio parameter or the like is "configured" may mean that a predetermined value is pre-configured, or may mean that a radio parameter notified from a base station 10 or a terminal 20 is configured.

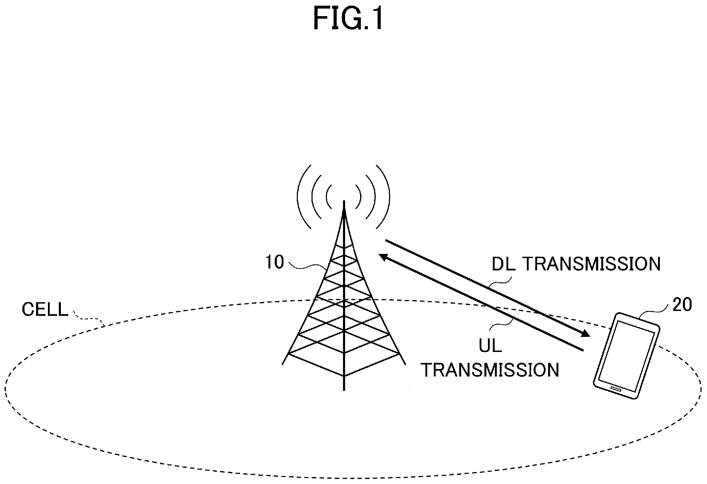

Fig. 1 is a diagram illustrating a wireless communication system according to an embodiment of the present invention. As illustrated in Fig. 1, the wireless communication system according to the embodiment of the present invention includes a base station 10 and a terminal 20. Although one base station and one terminal are illustrated in Fig. 1, this is an example, and a plurality of base stations 10 and a plurality of terminals 20 may be provided.

The base station 10 is a communication device that provides one or more cells and performs wireless communication with the terminal 20. Physical resources of a radio signal are defined in a time domain and a frequency domain, the time domain may be defined by the number of orthogonal frequency division multiplexing (OFDM) symbols, and the frequency domain may be defined by the number of sub-carriers or the number of resource blocks. In addition, a transmission time interval (TTI) in the time domain may be a slot, or a TTI may be a sub-frame.

The base station 10 transmits a synchronization signal and system information to the terminal 20. The synchronization signal is, for example, NR-PSS and NR-SSS. The system information is transmitted through, for example, NR-PBCH and is also referred to as notification information. The synchronization signal and the system information may be referred to as an SSB (SS/PBCH block). As illustrated in Fig. 1, the base station 10 transmits a control signal or data to the terminal 20 through a downlink (DL) and receives a control signal or data from the terminal 20 through an uplink (UL). Both the base station 10 and the terminal 20 can transmit and receive a signal by performing beamforming. In addition, both the base station 10 and the terminal 20 can apply communication based on multiple input multiple output (MIMO) to the DL or the UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (Primary SCG Cell, PSCell) of another base station 10 by dual connectivity (DC).

The terminal 20 is a communication device having a wireless communication function such as a smartphone, a mobile phone, a tablet, a wearable terminal, or a machine-to-machine (M2M) communication module. As illustrated in Fig. 1, the terminal 20 uses various communication services provided by the wireless communication system by receiving a control signal or data from the base station 10 using the DL and transmitting the control signal or the data to the base station 10 using the UL. In addition, the terminal 20 receives various reference signals transmitted from the base station 10 and measures propagation path quality based on the reception result of the reference signals. It is noted that the terminal 20 may be referred to as UE, and the base station 10 may be referred to as gNB.

In addition, in LTE or NR, a carrier aggregation function using a broadband to secure data resources is supported. In the carrier aggregation function, a plurality of component carriers is bundled, thereby making it possible to secure broadband data resources. For example, a 100 MHz bandwidth may be used by bundling a plurality of 20 MHz bandwidths.

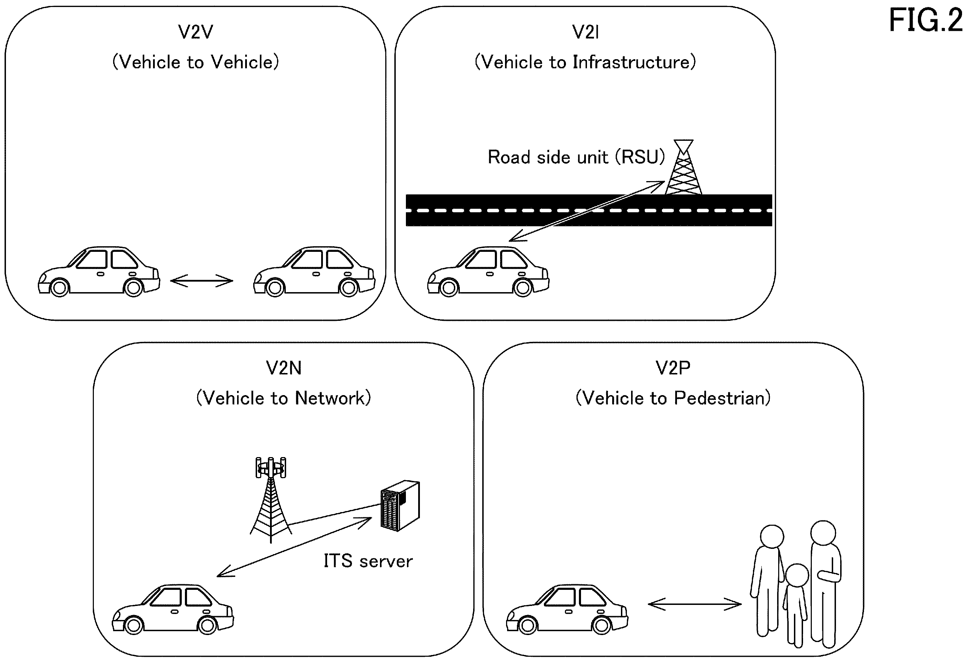

Fig. 2 is a diagram illustrating V2X. In 3GPP, realization of vehicle to everything (V2X) or enhanced V2X (eV2X) by extending a D2D function has been studied, and specification has been advanced. As illustrated in Fig. 1, V2X is a part of intelligent transport systems (ITS), and is a generic name of vehicle to vehicle (V2V) that means a communication form performed between vehicles, vehicle to infrastructure (V2I) that means a communication form performed between a vehicle and a road-side unit (RSU) installed beside a road, vehicle to network (V2N) that means a communication form performed between a vehicle and an ITS server, and vehicle to pedestrian (V2P) that means a communication form performed between a vehicle and a mobile terminal carried by a pedestrian.

In addition, in 3GPP, V2X using LTE or NR cellular communication and terminal-to-terminal communication has been studied. V2X using cellular communication is also referred to as cellular V2X. In V2X of NR, a study has been actively conducted to realize a large capacity, a low delay, high reliability, and quality of service (QoS) control.

Regarding V2X of LTE or NR, it is assumed that studies not limited to the 3GPP specification will be conducted in the future. For example, it is assumed that a study has been conducted on securing interoperability, reducing cost by implementation of an upper layer, a method of using or switching a plurality of radio access technologies (RATs), regulatory compliance in each country, and a method of acquiring data, distributing the data, managing a database, and using the database of LTE or NR V2X platforms.

In the embodiment of the present invention, a mode in which a communication device is mounted on a vehicle is mainly assumed, but the embodiment of the present invention is not limited to the mode. For example, the communication device may be a terminal carried by a person, the communication device may be a device mounted on a drone or an aircraft, or the communication device may be a base station, an RSU, a relay station (a relay node), a terminal having a scheduling capability, or the like.

It is noted that a sidelink (SL) may be distinguished on the basis of either or a combination of an uplink (UL) or a downlink (DL) and 1) to 4). Further, SL may be another name.
1) Resource allocation in time domain
2) Resource allocation in frequency domain
3) Synchronization signal to be referred to (including a sidelink synchronization signal (SLSS))
4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM not subjected to transform precoding, and OFDM subjected to transform precoding may be applied.

In the SL of LTE, a Mode 3 and a Mode 4 are stipulated regarding resource allocation of the SL to the terminal 20. In the Mode 3, transmission resources are dynamically allocated by downlink control information (DCI) transmitted from the base station 10 to the terminal 20. In the Mode 3, semi-persistent scheduling (SPS) is also possible. In the Mode 4, the terminal 20 autonomously selects a transmission resource from a resource pool.

It is noted that a slot in the embodiment of the present invention may be replaced with a symbol, a mini-slot, a sub-frame, a radio frame, a transmission time interval (TTI), and a time resource having a predetermined width. In addition, a cell in the embodiment of the present invention may be replaced with a cell group, a carrier component, a BWP, a resource pool, a resource, a radio access technology (RAT), a system (including a wireless LAN), or the like.

It is noted that, in the embodiment of the present invention, the terminal 20 is not limited to the V2X terminal, and may be any type of terminal that performs D2D communication. For example, the terminal 20 may be a terminal carried by a user, such as a smartphone, or may be an Internet of Things (IoT) device such as a smart meter.

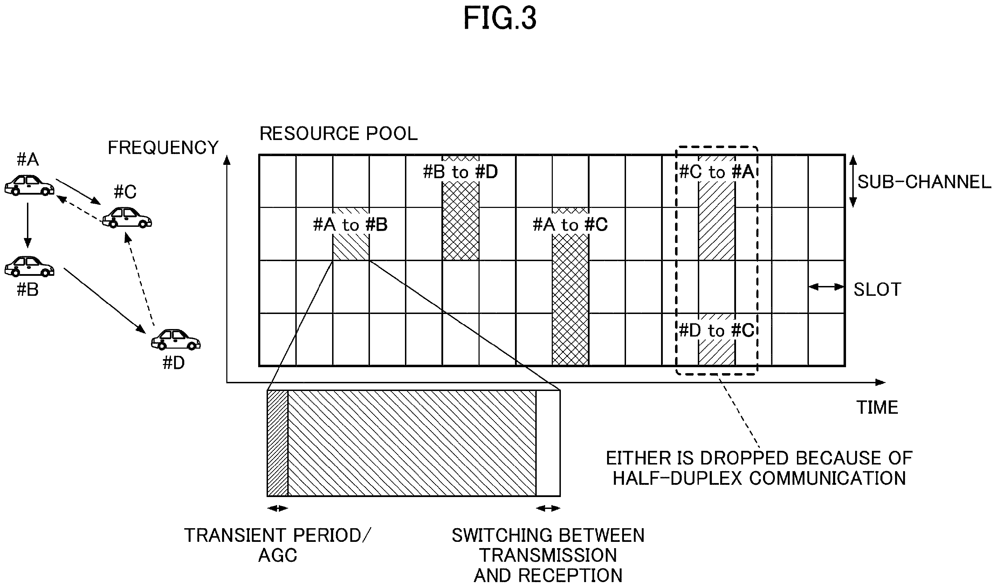

Fig. 3 is a diagram illustrating an example of communication in D2D. As illustrated in Fig. 3, an environment is assumed in which a plurality of UEs communicate with each other, such as a UE#A, a UE#B, a UE#C, and a UE#D. A resource pool used for transmission and reception by each UE is a set of resources in the time domain and the frequency domain. The resource pool may be set or set in advance by a system or a service provider. For example, in the resource pool, several time resources based on a period of time may be available for periodic traffic. Additionally, for example, in the resource pool, some frequency resources may be unavailable in order to reduce interference with a Uu interface (a radio interface between a universal terrestrial radio access network (UTRAN) and a user equipment (UE)).

A sub-channel in the resource pool shown in Fig. 3 is a unit of scheduling in frequency domain. For example, a {10, 12, 15, 20, 25, 50, 75, 100} PRB may be set as one sub-channel or may be set in advance.

A slot in the resource pool illustrated in Fig. 3 is a unit of time domain scheduling. The scheduling on a symbol basis may be too complex if the UE autonomously selects resources. However, the scheduling may not be performed in units of slots.

As illustrated in Fig. 3, the head of the slot to be transmitted from the UE#A to the UE#B is a transition period (a transient period) from the viewpoint of the transmitting UE. The transition period is a period necessary for adjustment of transmission power. On the other hand, the head of the slot to be transmitted from the UE#A to the UE#B is used for auto gain control (AGC) from the viewpoint of the receiving UE. The received power significantly varies between links, and a predetermined period is required to adjust a power range. By performing scheduling in units of slots, an increase in AGC opportunities can be prevented.

As illustrated in Fig. 3, the end of the slot to be transmitted from the UE#A to the UE#B is used for a switching period of transmission and reception. A certain UE may perform transmission in a slot n and then may perform reception in a slot n+1. The transmission/reception switching period is defined for each slot.

As illustrated in Fig. 3, when the transmission from the UE#C to the UE#A and the transmission from the UE#D to the UE#C overlap each other in the same slot, the UE#C cannot simultaneously execute the transmission and the reception, and thus, it is necessary to drop either of them. That is, communication in D2D is half-duplex communication.

It is noted that a default setting in a case where coverage is out of the coverage of the base station may be set in advance (pre-configured). It is noted that RRC connection/setting between UEs that perform unicast is referred to as PC5-RRC connection/setting.

Here, position measurement has been studied in scenarios of inter-terminal direct communication, for example, in-coverage, partial-coverage, and out-of-coverage, vehicle to everything (V2X), public safety, commercial, and industrial Internet of Things (IIOT), and the like. The in-coverage may mean that a plurality of UEs related to position measurement is within coverage of the BS, the partial-coverage may mean that a part of the plurality of UEs related to position measurement is within coverage of the BS, and the out-of-coverage may mean that the plurality of UEs related to position measurement is not within coverage of the BS.

Position measurement of the terminal 20 by location management function (LMF) in the Uu interface of 3GPP Release 16 or 17 is executed by methods of 1) to 3) described below (refer to Non Patent Literature 3, Non Patent Literature 4, and Non patent Literature 5).

1) Method based on time difference of arrival (DL-TDOA)
2) Method based on UL-TDOA
3) Method based on multiple round trip time (RTT)

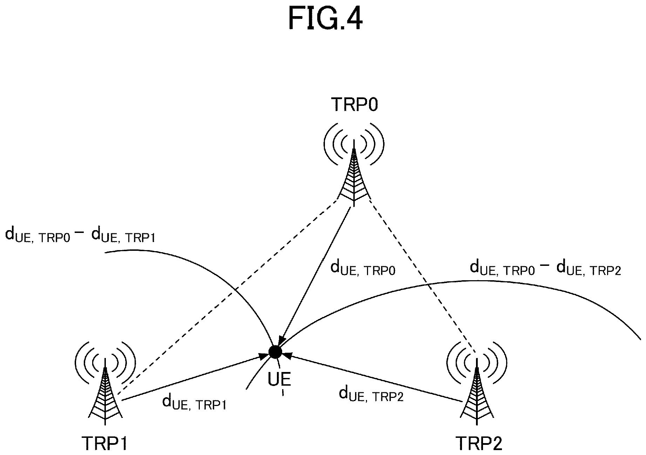

Fig. 4 is a diagram illustrating an example (1) of position measurement. As illustrated in Fig. 4, position information of the UE may be calculated based on the DL-TDOA. The position of the UE may be estimated based on a received signal time difference (DL-RSTD) in which the UE measures DL radio signals transmitted from a plurality of NR TRPs. For the estimation, the geographical position of the TRP and the DL transmission timing at the TRP may be used. Furthermore, the position of the UE may be estimated based on reference signal received power (RSRP) of positioning reference signal (DL-PRS) in addition to DL-RSTD.

In the method based on DL-TDOA, the position of the UE may be calculated in the following procedures.
1) gNB transmits DL-PRS from each TRP to UE
2) The UE reports DL-RSTD which is the measurement result to GW and/or the gNB and/or LMF via LTE positioning protocol (LPP).
3) The gNB reports timing information related to the TRP to the LMF via NR positioning protocol A (NRPPa).
4) Based on the above-described information reported from the UE and the gNB, the LMF calculates the position of the UE.

For example, as illustrated in Fig. 4, a delay between the UE and a TRP0, a delay between the UE and a TRP1, and a delay between the UE and a TRP2 may be measured, and the position of the UE may be calculated based on a geographical position of each TRP and a DL transmission timing.

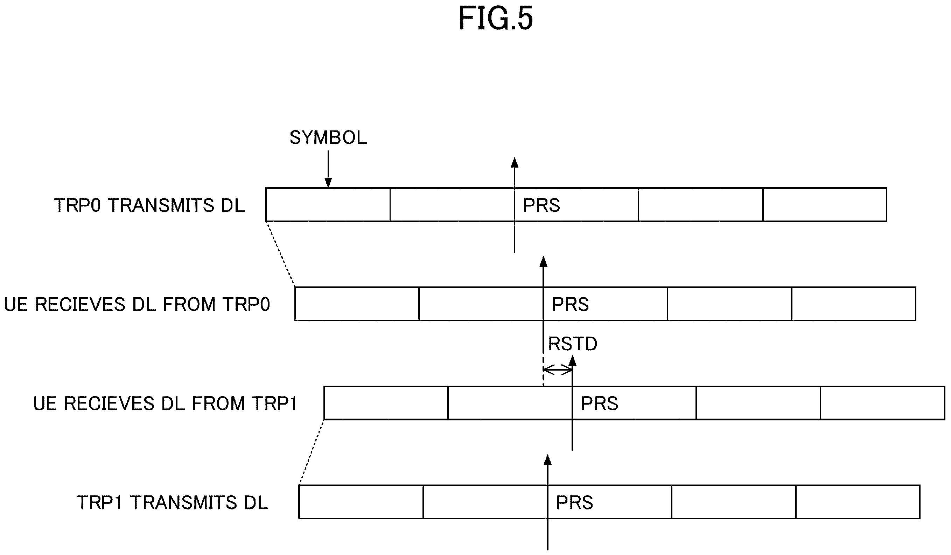

Fig. 5 is a diagram illustrating an example of measuring DL-RSTD. Hereinafter, "and/or" is also referred to as "/". As illustrated in Fig. 5, the DL-RSTD may refer to a time difference measured by the UE between a reception start time point of a DL sub-frame of a reference TRP (TRP0 in Fig. 5) and a reception start time point of a DL sub-frame of another TRP. By detecting the DL-PRS, the start of the sub-frame may be determined.

A transmission timing of each TRP is not necessarily uniform.

Regarding the calculation of the UE position by DL-TDOA, information indicated in the following 1) to 5) may be reported from the UE to GW/gNB/LMF.

1) Physical cell ID (PCI), global cell ID (GCI), and TRP-ID in each measurement
2) DL-RSTD measurement result
3) DL-PRS-RSRP measurement result
4) Time of measurement (time stamp)
5) Quality of each measurement

Regarding the calculation of the UE position by DL-TDOA, the information indicated in 1) to 6) below may be reported from the gNB to the LMF.

1) PCI, GCI, and TRP-ID of TRP controlled by gNB
2) Timing information of the TRP controlled by the gNB
3) DL-PRS setting of the TRP controlled by the gNB
4) Information on SSB of the TRP controlled by the gNB, for example, time and frequency resources of the SSB
5) Information on the spatial direction of the DL-PRS of the TRP controlled by the gNB
6) Information on geographic coordinates of the TRP controlled by the gNB

The DL-RSTD may be defined as a time difference measured by the UE between a reception start time point of the DL sub-frame of the reference TRP and a reception start time point of the DL sub-frame of another TRP. A plurality of DL-PRS resources may be used to determine a reception start time point of the sub-frame.

As the report of timing information related to the TRP controlled by the gNB, SFN initialization time of the TRP may be reported. The SFN initialization time is a time at which SFN0 is started.

As a report of information related to the geographical coordinates of the TRP controlled by the gNB, an ellipse indicating a point on an ellipsoid having an altitude and a range of error may be reported (refer to Non Patent Literature 6). For example, a latitude, a longitude, an altitude, an altitude direction, an altitude error range, and the like may be reported.

As illustrated in Fig. 4, position information of the UE may be calculated based on the UL-TDOA. The position of the UE may be estimated based on relative time of arrival (UL-RTOA) in which a plurality of NR TRPs measures the UL radio signal transmitted from the UE. Other setting information may be used for the estimation. Further, the position of the UE may be estimated based on RSRP of a sounding reference signal (UL-SRS) in addition to the UL-RTOA.

In the method based on UL-TDOA, the position of the UE may be calculated in the following procedures.
1) UE transmits SRS to a plurality of TRPs.
2) gNB reports measurement results including UL-RTOA and TRP geographic coordinates to LMF via NRPPa.
3) The LMF calculates the position of the UE based on the information reported by the gNB.

For example, as illustrated in Fig. 4, an RTOA from the UE to the TRP0, an RTOA from the UE to the TRP1, and an RTOA from the UE to the TRP2 may be measured, and the position of the UE may be calculated based on the geographical position of each TRP and a UL transmission timing.

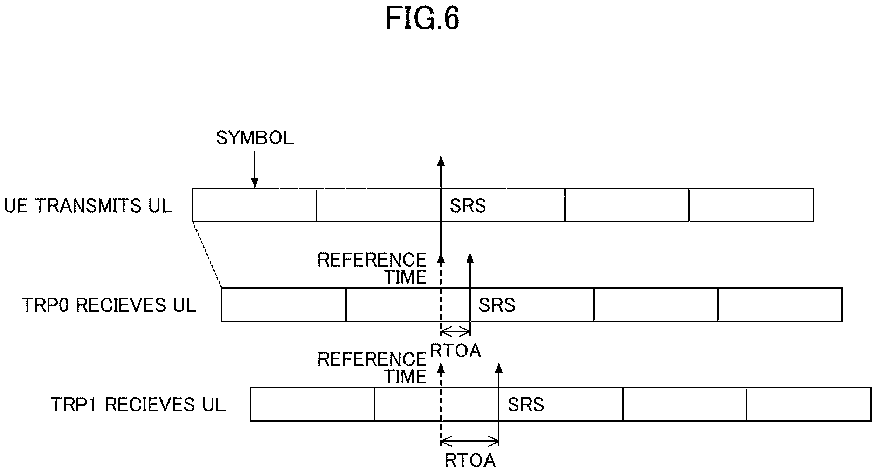

Fig. 6 is a diagram illustrating an example of measuring UL-RTOA. As illustrated in Fig. 6, the UL-RTOA may refer to a time difference between a reception start time point of a UL sub-frame including the SRS of the TRP and an RTOA reference time at which the UL is transmitted.

Regarding the calculation of the UE position by the UL-TDOA, pieces of information indicated in 1) to 9) below may be reported from the gNB to the LMF.

1) PCI, GCI, and TRP-ID of TRP controlled by gNB
2) Information on SSB of the TRP controlled by the gNB, for example, time and frequency resources of the SSB
3) Information on geographic coordinates of the TRP controlled by the gNB
4) NR cell global identifier (NCGI) and TRP-ID of measurement
5) UL-RTOA
6) RSRP of UL-SRS
7) Time of measurement
8) Quality of each measurement
9) Information on beam of each measurement

The UL-RTOA may be defined as a time difference between a reception start time point of the UL sub-frame including the SRS at the TRP and an RTOA reference time at which the UL is transmitted. The gNB may report the geographical coordinates of the TRPs to the LMF via the NRPPa.

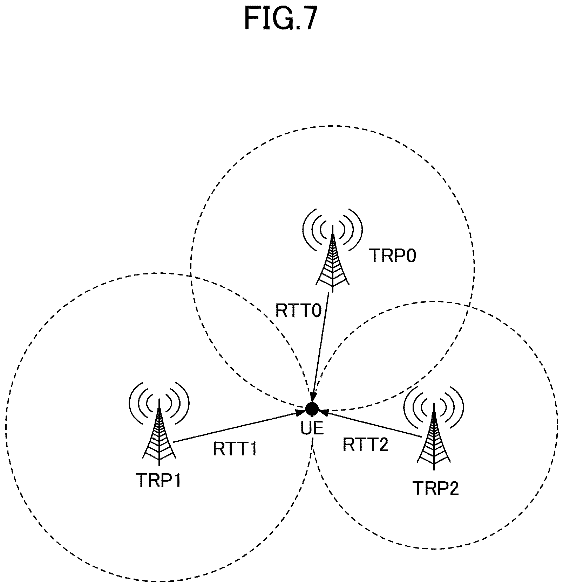

Fig. 7 is a diagram illustrating an example (2) of position measurement. As illustrated in Fig. 7, the position information of the UE may be calculated based on a plurality of RTTs. The position of the UE may be estimated based on UE/gNB reception-transmission time difference measurement using DL-PRS and UL-SRS. For the estimation, DL-PRS-RSRP and UL-SRS-RSRP may be used. The LMF may determine the RTT using UE/gNB reception-transmission time difference measurement.

In the method based on the multi-RTT, the position of the UE may be calculated in the following procedures.
1) gNB transmits DL-PRS from each TRP to UE
2) UE transmits SRS to a plurality of TRPs.
3) The UE reports a UE reception-transmission time difference to GW and/or gNB and/or LMF via LPP.
4) The gNB reports a gNB reception-transmission time difference to the LMF via NRPPa.
5) Based on the information reported from the UE and the gNB, the LMF calculates the position of the UE.

For example, as illustrated in Fig. 7, an RTT between the UE and the TRP0, an RTT between the UE and the TRP1, and an RTT between the UE and the TRP2 may be measured, and the position of the UE may be calculated based on the geographical position of each TRP.

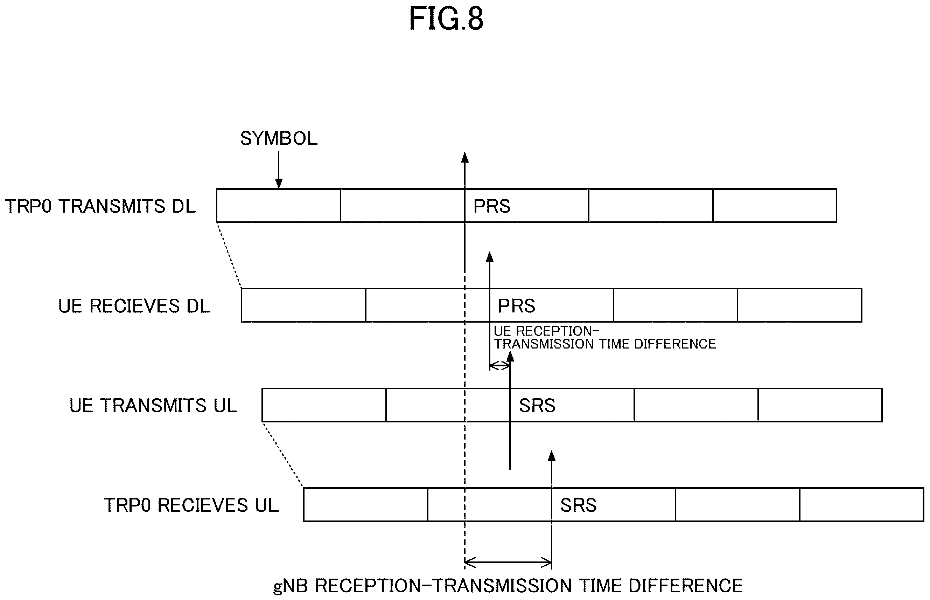

Fig. 8 is a diagram illustrating an example of measuring the RTT. As illustrated in Fig. 8, the UE reception-transmission time difference may refer to a time difference between a timing of receiving the DL sub-frame from the TRP and a timing of transmitting the UL sub-frame. In addition, as illustrated in Fig. 8, the gNB reception-transmission time difference may refer to a time difference between a timing at which the TRP receives the UL sub-frame and a timing at which the TRP transmits the DL sub-frame.

Regarding the calculation of the UE position by the plurality of RTTs, information indicated in the following 1) to 5) may be reported from the UE to the GW/gNB/LMF.

1) PCI, GCI, and TRP-ID in each measurement
2) DL-PRS-RSRP measurement result
3) UE reception-transmission time difference measurement result
4) Time of measurement
5) Quality of each measurement

Regarding the calculation of the UE position by the RTT, pieces of information indicated in the following 1) to 9) may be reported from the gNB to the LMF.

1) PCI, GCI, and TRP-ID of TRP controlled by gNB
2) Timing information of the TRP controlled by the gNB
3) DL-PRS setting of the TRP controlled by the gNB
4) Information on SSB of the TRP controlled by the gNB, for example, time and frequency resources of the SSB
5) Information on the spatial direction of the DL-PRS of the TRP controlled by the gNB
6) Information on geographic coordinates of the TRP controlled by the gNB
7) NCGI and TRP-ID of measurement
8) gNB reception-transmission time difference
9) RSRP of UL-SRS
10) UL-angle of arrival (AoA), for example, azimuth and elevation
11) Time of measurement
12) Quality of measurement
13) Information on beam of measurement

It is noted that the definitions of the UE reception-transmission time difference and the gNB reception-transmission time difference may refer to Non Patent Literature 7. Similar to the DL-RSTD, the geographical coordinates of the TRPs may be reported.

As described above, in the position measurement by the Uu interface, the position measurement method by DL-TDOA, UL-TDOA, and multi-RTT using RSTD, RTOA, and a reception-transmission time difference indicating a propagation delay between the UE and the TRP, respectively, has been applied.

Here, in order to perform position estimation using a sidelink signal, it is necessary to consider a position estimation algorithm for absolute position estimation or relative position estimation, a definition and transmission/reception procedure of a measurement sidelink signal used for position estimation, a measurement result reporting procedure, and the like. However, a position estimation algorithm for absolute position estimation or relative position estimation using a signal of inter-terminal direct communication has not been clear.

Therefore, an option 1) to an option 7) described below may be executed.

Option 1) With respect to the position estimation using the sidelink, the terminal 20 (hereinafter, referred to as a "UE-X") seeking to acquire the terminal's own position information may transmit a predetermined signal to another terminal 20 (hereinafter, referred to as a "UE-Y") and may receive a signal (for example, a measurement result) based on the signal from the UE-Y.

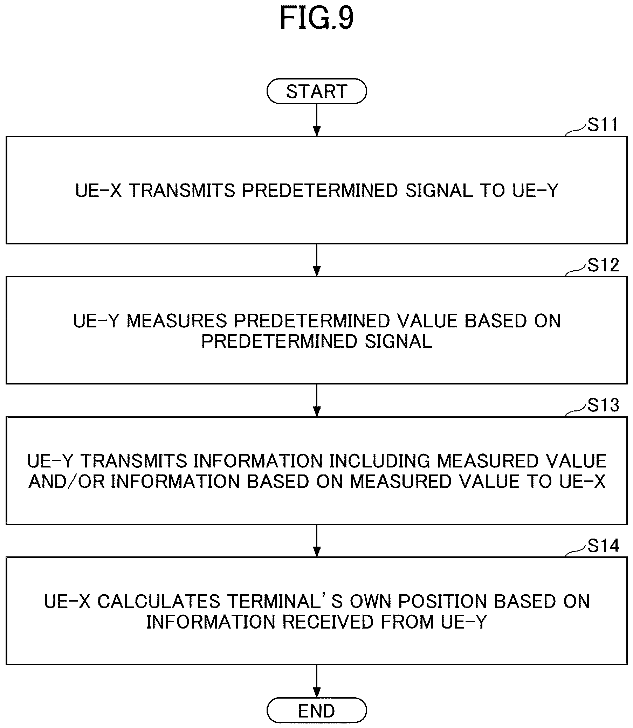

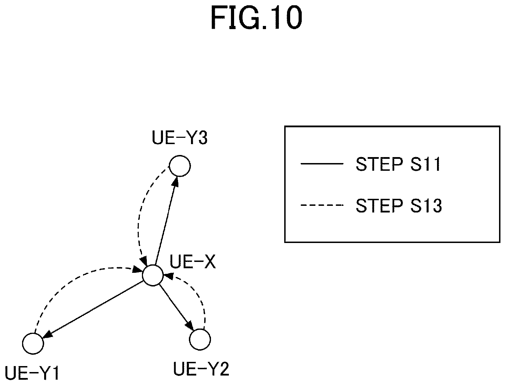

Fig. 9 is a flowchart illustrating an example (1) of position estimation according to the embodiment of the present invention. Fig. 10 is a diagram illustrating the example (1) of position estimation according to the embodiment of the present invention.

As illustrated in Figs. 9 and 10, in step S11, the UE-X transmits a predetermined signal to the UE-Y. In subsequent step S12, the UE-Y measures a predetermined value based on the predetermined signal. It is noted that step S12 is not necessarily applied. In subsequent step S13, the UE-Y transmits a signal (which may include, for example, information including the measured value and/or information based on the measured value) based on the predetermined signal to the UE-X. In subsequent step S14, the UE-X calculates the terminal's own position based on the information received from the UE-Y.

For example, as in a UE-Y1, a UE-Y2, and a UE-Y3 illustrated in Fig. 10, the UE-Y may be one or a plurality of UEs. That is, the UE-X may execute step S11 to step S14 for one or a plurality of UEs.

For example, the predetermined signal may be an SL positioning RS (SL-PRS) or any other SL signal. Further, the signal transmitted by the UE-Y may be the SL-PRS or any other SL signal.

Hereinafter, the signal used for the position estimation will be referred to as the SL-PRS, but is not limited thereto, and may be another name. It is noted that the position estimation and the position measurement may be replaceable with each other.

For example, the SL-PRS may be multiplexed in PSCCH and/or PSSCH transmission and may be transmitted. Alternatively, the SL-PRS may be transmitted with a resource dedicated to the SL-PRS. Hereinafter, "PSCCH and/or PSSCH" is also referred to as "PSCCH/PSSCH".

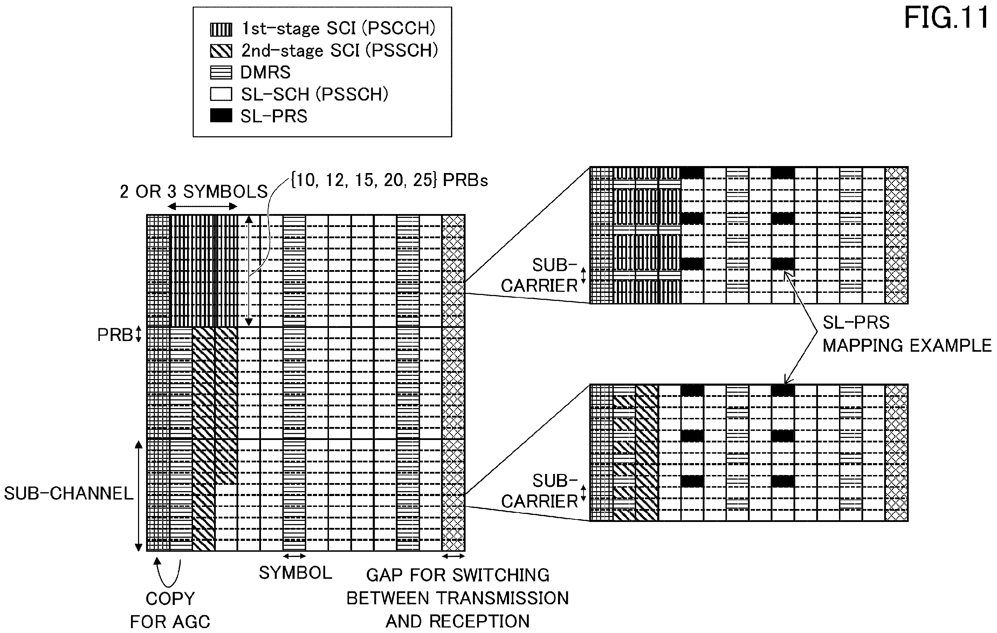

Fig. 11 is a diagram illustrating an arrangement example of a reference signal according to the embodiment of the present invention The SL-PRS may be arranged as shown in the following 1) to 3).
1) The SL-PRS is not necessarily multiplexed in an RE in which a second stage SCI and/or DM-RS and/or PT-RS and/or CSI-RS are arranged. For example, an overlap between the SL-PRS and the second stage SCI, the DM-RS, PT-RS, and the CSI-RS is not necessarily assumed. For example, in a case where a mapping destination of the SL-PRS is an RE in which the second stage SCI, the DM-RS, the PT-RS, or the CSI-RS are arranged, mapping of the SL-PRS to the RE is not necessarily executed.
2) The SL-PRS is not necessarily multiplexed in the RE of PSCCH. For example, an overlap between the PSCCH and the SL-PRS is not necessarily assumed. For example, in a case where the mapping destination of the SL-PRS is an RE in which the PSCCH is disposed, mapping of the SL-PRS to the RE is not necessarily executed with priority to the PSCCH.
3) The SL-PRS may be subjected to frequency division multiplexing on the same symbol as the second stage SCI and/or the DM-RS and/or the PT-RS and/or the CSI-RS, or is not necessarily subjected to the frequency division multiplexing on the same symbol.

According to the above 1) or 2), an important signal can be prevented from being replaced with the SL-PRS. In addition, according to the above 3), flexibility of mapping in a case where the SL-PRS is subjected to the frequency division multiplexing is improved, and a UE operation can be simplified in a case where the SL-PRS is not subjected to the frequency division multiplexing. However, Fig. 11 is an example of mapping of the SL-PRS, and the present invention is not limited thereto.

For example, in step S14, the terminal's own position calculated by the UE-X may be an absolute position or a relative position.

For example, the option 1) may be applied when the UE-X and the UE-Y are in an out-of-coverage (out-of-coverage, OoC) environment, may be applied when the UE-X and the UE-Y are in a partial-coverage (PC) environment, or may be applied when the UE-X and the UE-Y are in an in-coverage (IC) environment.

With the above-described option 1), the terminal 20 can execute an operation for position information acquisition.

Option 2) Regarding the position estimation using the sidelink, the UE-X seeking to acquire the terminal's own position information may transmit a predetermined signal to the UE-Y and/or the base station 10 (hereinafter, referred to as "BS-Y") and may receive a signal (for example, a measurement result) based on the signal from the UE-Y and/or the BS-Y.

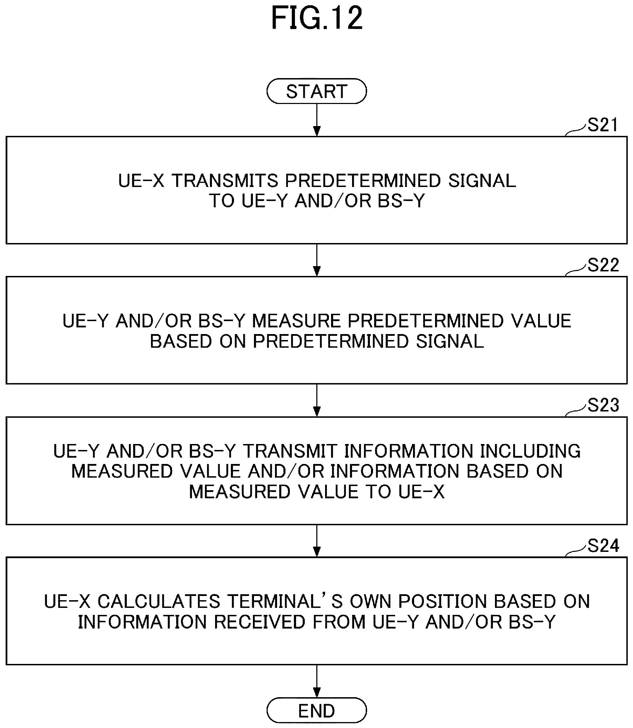

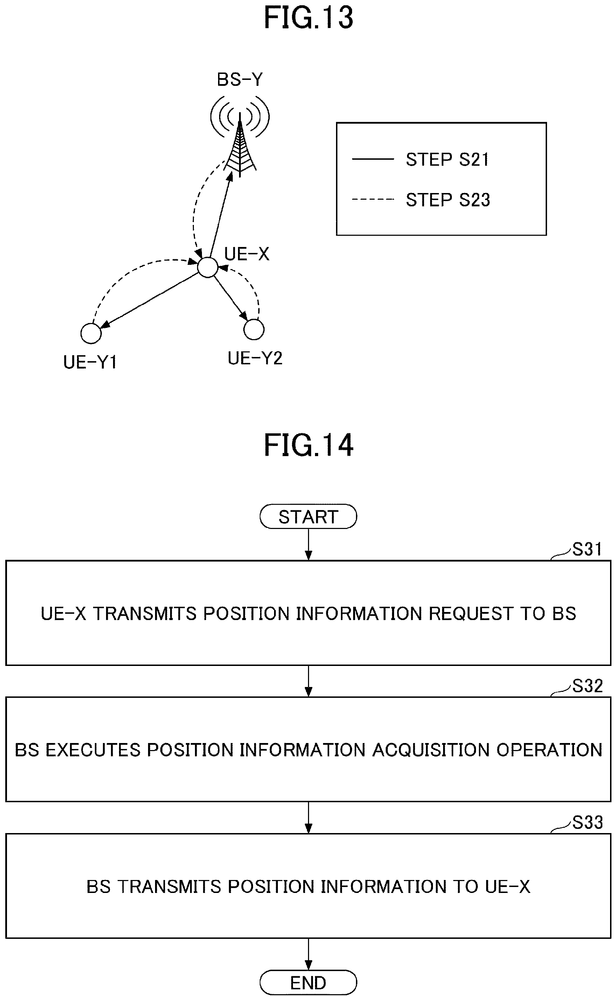

Fig. 12 is a flowchart illustrating an example (2) of position estimation according to the embodiment of the present invention. Fig. 13 is a diagram illustrating the example (2) of position estimation according to the embodiment of the present invention.

As illustrated in Figs. 12 and 13, in step S21, the UE-X transmits a predetermined signal to the UE-Y and/or the BS-Y. In subsequent step S22, the UE-Y and/or the BS-Y measure a predetermined value based on the predetermined signal. It is noted that step S22 is not necessarily applied. In subsequent step S23, the UE-Y and/or the BS-Y transmit a signal (for example, information including the measured value and/or information based on the measured value may be included) based on the predetermined signal to the UE-X. In subsequent step S24, the UE-X calculates the terminal's own position based on the information received from the UE-Y and/or the BS-Y.

For example, as in a UE-Y1 and a UE-Y2 illustrated in Fig. 13, the UE-Y may be one or a plurality of UEs. That is, the UE-X may execute step S11 to step S14 for one or a plurality of UEs. Further, the BS-Y may be one or a plurality of BSs.

For example, the predetermined signal for the UE-Y may be the SL-PRS or any other SL signal. For example, the predetermined signal for the BS-Y may be the SRS or any other UL signal. Further, the signal transmitted by the UE-Y may be the SL-PRS or any other SL signal. In addition, the signal transmitted by the BS-Y may be the DL-PRS or any other DL signal.

For example, in step S24, the terminal's own position calculated by the UE-X may be an absolute position or a relative position.

For example, the option 2) may be applied in the case of the partial-coverage environment or the in-coverage environment. However, the case of the partial-coverage environment may be a case in which the UE-X is in the in-coverage environment and a case in which the UE-Y is in the out-of-coverage environment.

According to the above-described option 2), the terminal 20 can be expected to acquire more accurate position information by using the base station 10.

Option 3) The UE-X seeking to acquire the terminal's own position may transmit a request for position information transmission to the BS. For example, only the terminal 20 supporting a position measurement function by the Uu interface may execute the option 3).

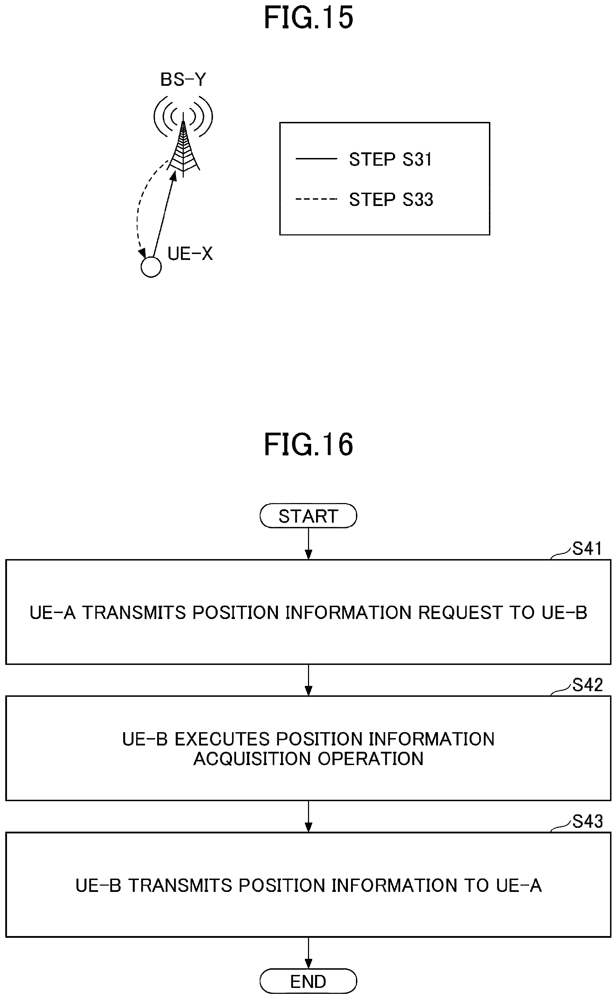

Fig. 14 is a flowchart illustrating an example (3) of position estimation according to the embodiment of the present invention. Fig. 15 is a diagram illustrating the example (3) of position estimation according to the embodiment of the present invention. As illustrated in Figs. 14 and 15, in step S31, the UE-X transmits a position information request to the BS. In subsequent step S32, the BS executes a position information acquisition operation. In subsequent step S33, the BS transmits position information to the UE-X.

For example, in step S32, the position measurement function using the Uu interface described above may be applied.

For example, step S32 may be skipped without execution thereof. For example, when the BS already holds the position information of the UE-X, step S32 is not necessarily executed. Further, for example, when the BS already holds the position information of the UE-X and satisfies a desired accuracy requirement, step S32 is not necessarily executed. For example, step S33 may be skipped without execution thereof. For example, when the DL-PRS is transmitted from a plurality of BS/TRPs to the UE-X and position measurement is executed in the UE-X in step S32, step S33 is not necessarily executed.

For example, the position information requested by the UE-X may be the absolute position or the relative position.

For example, the UE-X may receive a notification indicating that the position information cannot be acquired from the BS instead of the position information. After receiving the notification, the UE-X may execute another method, for example, the option 1) or the option 2) so as to acquire the position information.

With the above-described option 3), the terminal 20 can execute an operation for position information acquisition. By using Uu position measurement, more accurate position measurement can be expected.

Option 4) Which one of the option 1), the option 2), and the option 3) is to be executed may be determined based on a predetermined condition.

For example, the predetermined condition may be any one of the out-of-coverage environment, the partial-coverage environment, and the in-coverage environment.

For example, the predetermined condition may be an accuracy requirement. That is, an option to be applied may be determined based on whether the accuracy requirement is higher or lower than a predetermined threshold value.

For example, the predetermined condition may be any one of the absolute position and the relative position to be acquired.

For example, the predetermined condition may be a predetermined priority set for each option. For example, the option 3) may be the highest priority, the option 2) may be the second highest priority, and the option 3) may be the lowest priority. When the option with the highest priority cannot be executed, the operation of executing the option with the second highest priority may be repeatedly performed.

For example, the predetermined condition may be a UE capability. That is, an option to be supported may be stipulated as the UE capability, and the terminal 20 may execute the option to be supported.

For example, the predetermined condition may be UE implementation. That is, the terminal 20 may determine an option to be executed based on the UE implementation.

With the above-described option 4), the terminal 20 can determine a method to be executed when a plurality of position acquisition methods are available.

Option 5) The terminal 20 (hereinafter, referred to as a "UE-A") seeking to acquire the position information of the other terminal 20 (hereinafter, referred to as a "UE-B") may transmit a request for position information transmission to the UE-B.

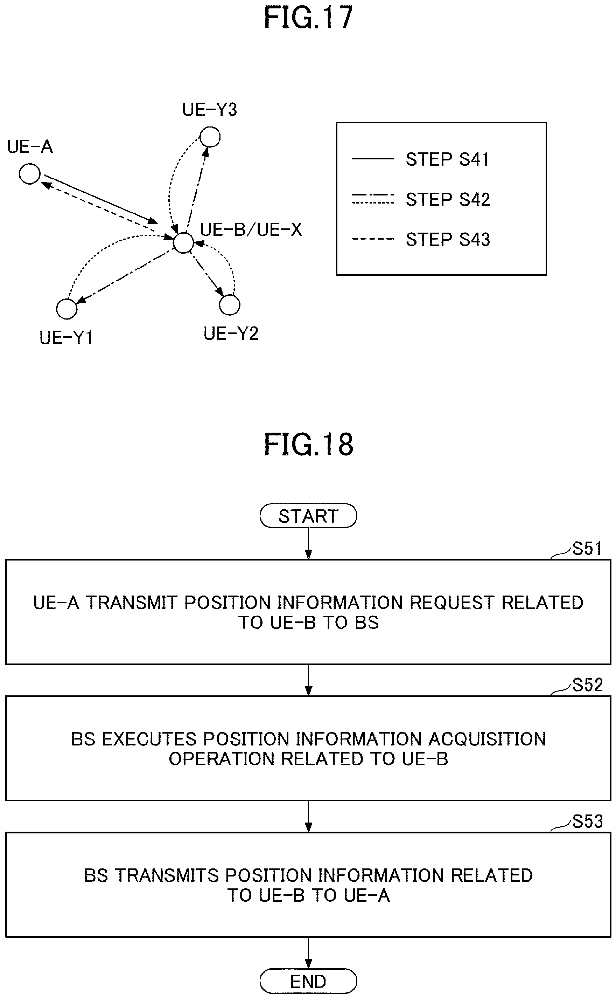

Fig. 16 is a flowchart illustrating an example (4) of position estimation according to the embodiment of the present invention. Fig. 17 is a diagram illustrating the example (4) of position estimation according to the embodiment of the present invention. As illustrated in Figs. 16 and 17, in step S41, the UE-A transmits a position information request to the UE-B. In subsequent step S42, the UE-B executes a position information acquisition operation. In subsequent step S43, the UE-B transmits position information of the UE-B to the UE-A.

For example, in step S42, the option 1), the option 2), or the option 3) may be executed. The UE-B may be the UE-X in the option 1), the option 2), or the option 3). The UE-A may or may not be included in the UE-Y of the option 1), the option 2), or the option 3). When the UE-A is included in the UE-Y in the option 1), the option 2), or the option 3), any step in the option 1), the option 2), or the option 3) for the UE-A may be skipped without execution thereof.

For example, step S42 may be skipped without execution thereof. For example, when the UE-B already holds the terminal's own position information, step S42 is not necessarily executed. Furthermore, for example, when the UE-B already holds the terminal's own position information and satisfies a desired accuracy requirement, step S42 is not necessarily executed.

For example, the position information requested by the UE-A may be an absolute position or a relative position.

With the option 5), it is possible to support a use case and a service that requires the position information of another UE. In addition, the operation of acquiring the position information of the other UE and the operation of acquiring the terminal's own position information can be made common.

Option 6) The terminal 20 (hereinafter, referred to as the "UE-A") seeking to acquire the position information of the other terminal 20 (hereinafter, referred to as the "UE-B") may transmit, to the BS, a request for position information transmission related to the UE-B.

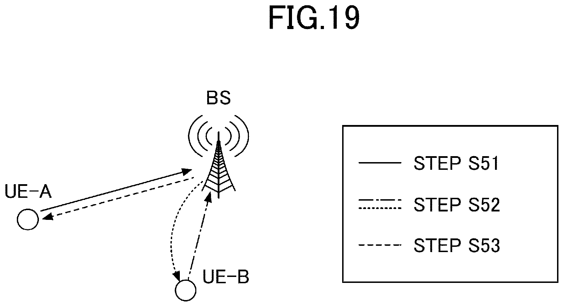

Fig. 18 is a flowchart illustrating an example (5) of position estimation according to the embodiment of the present invention. Fig. 19 is a diagram illustrating the example (5) of position estimation according to the embodiment of the present invention. As illustrated in Figs. 18 and 19, in step S51, the UE-A transmits, to the BS, a position information request related to the UE-B. In subsequent step S52, the BS executes a position information acquisition operation related to the UE-B. In subsequent step S53, the BS transmits, to the UE-A, position information related to the UE-B.

For example, in step S52, the position measurement function of the Uu interface, for example, the position measurement function of the Uu interface described above may be executed.

For example, in step S52, the BS may instruct the UE-B to execute a position measurement function of the SL, for example, the option 1) or the option 2). The UE-B may execute the position measurement function of the SL such as the option 1) or the option 2), and may report the acquired terminal's own position information to the BS.

For example, step S52 may be skipped without execution thereof. For example, when the BS already holds the position information of the UE-B, step S52 is not necessarily executed. Furthermore, for example, when the BS already holds the position information of the UE-B and satisfies the desired accuracy requirement, step S52 is not necessarily executed.

For example, the position information requested by the UE-A may be an absolute position or a relative position.

For example, the UE-A may receive a notification indicating that the position information on the UE-B cannot be acquired from the BS instead of the position information. After receiving the notification, the UE-A may execute another method such as the option 5) so as to acquire the position information.

With the above-described option 6), the terminal 20 can execute an operation for position information acquisition. By using Uu position measurement, more accurate position measurement can be expected.

Option 7) Which one of the option 5) or the option 6) is to be executed may be determined based on a predetermined condition.

For example, the predetermined condition may be any one of the out-of-coverage environment, the partial-coverage environment, or the in-coverage environment.

For example, the predetermined condition may be an accuracy requirement.

For example, the predetermined condition may be any one of the absolute position and the relative position to be acquired.

For example, the predetermined condition may be a predetermined priority set for each option. For example, the option 6) may have a higher priority than that of the option 5).

For example, the predetermined condition may be a UE capability. That is, an option to be supported may be stipulated as the UE capability, and the terminal 20 may execute the option to be supported.

For example, the predetermined condition may be UE implementation. That is, the terminal 20 may determine an option to be executed based on the UE implementation.

With the above-described option 7), the terminal 20 can determine a method to be executed when a plurality of position acquisition methods are available.

Here, in the sidelink communication, it is necessary to define details of an operation related to a request for the position information and details of an operation related to a report of the position information.

Therefore, transmission and reception of the SL signal related to the position information may be executed between the UE (UE-A), which seeks to acquire the position of the other UE (UE-B), and the UE-B.

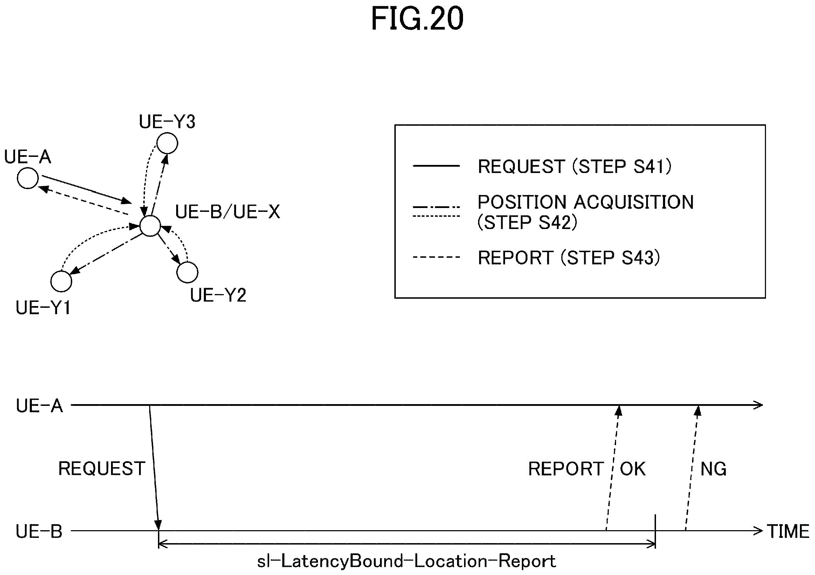

Fig. 20 is a diagram illustrating an example (1) of reporting position information according to the embodiment of the present invention. A request illustrated in Fig. 20 may be executed similarly to step S41. The position acquisition may be performed similarly to step S42. The report may be executed similarly to step S43.

The UE-A may execute the following operations of 1) to 4).
1) At least one piece of the following information may be included in a request for position information transmission, in which the request is transmitted from the UE-A to the UE-B.
   · Accuracy requirement
   · Which one of absolute position or relative position is to be required
   · UE-ID or group ID of UE-B
   · Operating conditions such as RSRP, relative distance
   · Report timing or report deadline
   · Resource or resource candidate for report
   · Position information of UE-A itself
   The pieces of information or a combination of the pieces of information may be given by setting, pre-setting, or PC5-RRC setting, and notified by a value (for example, an index) corresponding to the setting, the pre-setting, or the PC5-RRC setting.
2) The UE-A may transmit SL-PRS to the UE-B along with transmission of a request.
3) The request may be transmitted by any one of SCI, MAC-CE, or RRC signaling.
4) The request may be transmitted by any one of unicast, groupcast, or broadcast.

With the above-described operation, it is possible to determine an operation of acquiring the position information required by the UE-A.

The UE-B may execute the following operations 1) to 6) .
1) At least one piece of the following information may be included in the information related to the position transmitted from the UE-B to the UE-A, that is, the report.
   · Whether information relates to an absolute position or a relative position
   · Accuracy
   · Expiration date of information
   · Information related to position information calculation (acquisition method, value to be used (for example, position information based on RTOA, RSRP, RTT, and GNSS), signal transmission/reception UE at the time of acquisition)
2) The report may be transmitted by SCI, MAC-CE, or RRC signaling.
3) The UE-B may determine, based on any one of the following points, whether to transmit the information related to the terminal's own position to the UE-A.
   · Predetermined operation execution condition (may be an operation execution condition based on information received from UE-A)
   · UE-B Implementation
4) The report may be transmitted by any one of unicast, groupcast, or broadcast.
5) Instead of reporting the information, the UE-B may transmit a signal indicating report rejection or non-reportability to the UE-A. The UE-B may determine, based on a specific rule, any one of 1) to 5) to be executed by the UE-B. For example, when the measurement operation cannot be performed, the UE-B may execute the 5). In addition, any one of 1) to 5) to be executed may be determined based on the implementation of the UE-B.
6) The UE-B may determine a transmission resource of 1) or 5) by any one of the following methods.
   · Select from resource notified from UE-A
   · Use resource corresponding to request received from UE-A
   · Select resource autonomously in the same manner as that at the time of data transmission of the own terminal
   · Use resource notified from BS

With the above-described operations, an appropriate operation can be executed in response to the position information request of the UE-A.

After a request for position information transmission is transmitted from the UE-A to the UE-B, the UE-B may transmit the position information by a predetermined timing.

The predetermined timing may be determined based on an RRC parameter (for example, sl-LatencyBound-Location-Report illustrated in Fig. 20). The RRC parameter may be provided by setting or pre-setting, or may be provided by PC5-RRC setting. The RRC parameter may be given for each predetermined condition. The predetermined condition may be, for example, a requirement or priority of position measurement. Which one of the RRC parameters is to be used may be implicitly or explicitly notified from the UE-A to the UE-B.

According to the operations, latency bound can be set to an appropriate value for each use case.

The predetermined timing may be notified to the UE-B together with the transmission of the request. As a result, the predetermined timing can be flexibly changed.

The predetermined timing may be a timing at which a predetermined time has elapsed from a reception timing of a request (for example, a slot or the last symbol of the slot in which the request is received) as a starting point.

A timer for completing the operation by the predetermined timing may be defined and used by an upper layer (for example, an MAC layer).

The UE-B may execute an operation related to determination of a transmission resource for the UE-A so as to complete the operation by the predetermined timing. For example, in the case of a resource allocation mode 2, an end of a resource selection window may be set to the predetermined timing or a timing earlier than the predetermined timing. For example, in the case of a resource allocation mode 1, a resource request for SL-PRS transmission and a transmission deadline may be notified to the BS via a scheduling request (SR) or a buffer status report (BSR).

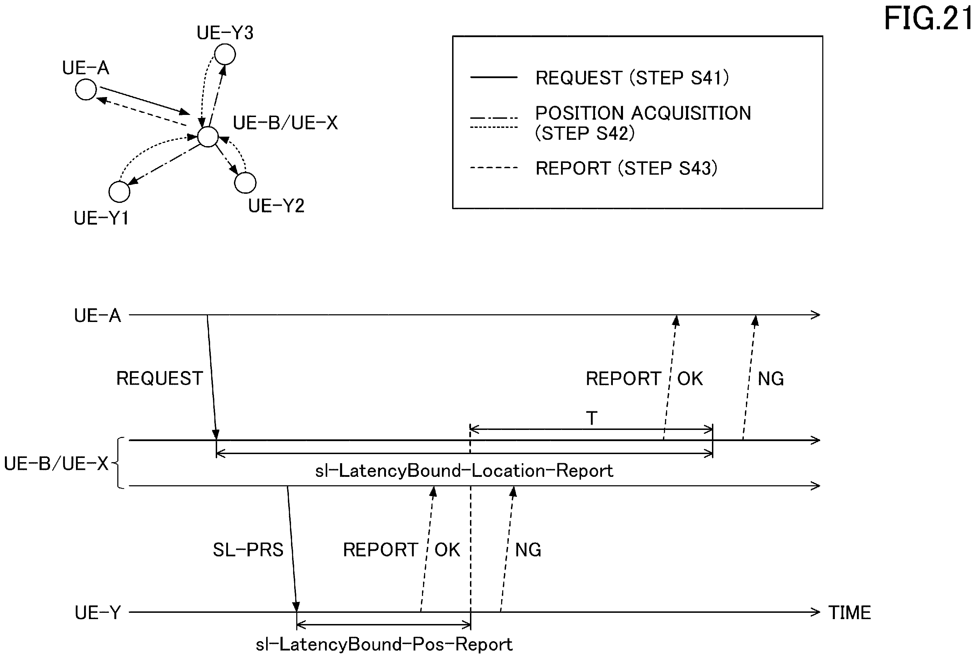

The UE-B may execute an operation related to position information acquisition of the own terminal so as to complete the operation by the predetermined timing. Fig. 21 is a diagram illustrating an example (2) of reporting position information according to the embodiment of the present invention. As illustrated in Fig. 21, when the UE-B operates as the UE-X described in Figs. 9 to 16, the operation related to the signal transmission and reception with the UE-Y may be completed before the predetermined timing.

As illustrated in Fig. 21, after sl-LatencyBound-Pos-Report indicating latency bound of a report from the UE-Y to the UE-X has elapsed, a predetermined time T (for example, a time during which the resource selection window can be determined) or more may be secured until the sl-LatencyBound-Location-Report elapses. It is noted that the sl-LatencyBound-Pos-Report may be replaced with sl-LatencyBound-Pos-RS indicating latency bound of SL-PRS transmission from the UE-Y to the UE-X.

The UE-X does not necessarily delay the signal transmission to the UE-Y, and for example, the end of the resource selection window may be equal to or less than a predetermined value. In addition, the sl-LatencyBound-Pos-Report may not be made long so as to secure the T.

As illustrated in Fig. 21, the T may be applied with an sl-LatencyBound-Pos-Report elapsed timing as a starting point, or may be applied with a predetermined time (for example, a processing time) from the elapsed timing as a starting point. Further, the T may be applied with the sl-LatencyBound-Location-Report elapsed timing as an end point.

When transmission of the position information of the UE-A from the UE-B is not completed by the predetermined timing, an operation related to the transmission may be stopped in the UE-B and/or the UE-A. The series of operations (step S41 to step S43) may be executed as an SL-CSI report. For example, in a request of the SL-CSI report, which one of the CQI/RI or the position information is requested may be notified.

By the above-described operation, transmission and reception of information for position information measurement can be completed by a necessary timing.

It is noted that at least some of the UE-Bs in the above-described embodiment may be replaced with BSs. The above-described embodiment may be applied to the operations illustrated in Figs. 18 and 19. It is noted that any operation described above with reference to Figs. 9 to 16 may be applied to the operation of the UE-B after receiving the request and before transmitting the position information. In a case where there is already acquired position information, the UE-B does not necessarily execute an operation for acquiring the position information and may perform a report to the UE-A.

The above-described embodiment may be applied to D2D of NR or may be applied to D2D of another RAT. In addition, the above-described embodiment may be applied to FR2 or may be applied to other frequency bands.

The above-described embodiment is not limited to the V2X terminal, and may be applied to a terminal that performs D2D communication.

The operation according to the above-described embodiment may be executed only in a specific resource pool. For example, processing may be executed only in a resource pool available to the terminal 20 of 3GPP Release 17 or 3GPP Release or later.

According to the above-described embodiment, the terminal 20 can acquire position information of another terminal by using a sidelink signal. In addition, the terminal 20 transmits and receives a report at a timing before latency bound by using the sidelink signal, thereby making it possible to acquire the position information of another terminal by a necessary timing.

That is, it is possible to acquire the position information of another terminal by inter-terminal direct communication

### (Device Configuration)

Next, a description will be given as to functional configuration examples of the base station 10 and the terminal 20 that execute processes and operations described above. The base station 10 and the terminal 20 include a function of implementing the above-described embodiment. However, each of the base station 10 and the terminal 20 may have only some functions in the embodiment.

### <Base Station 10>

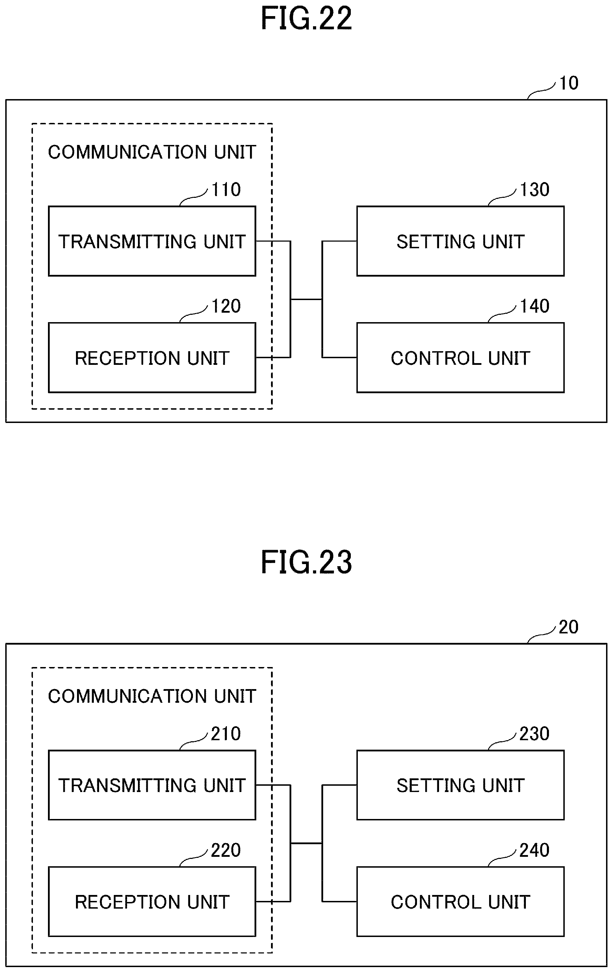

Fig. 22 is a diagram illustrating an example of a functional configuration of the base station 10. As illustrated in Fig. 22, the base station 10 includes a transmitting unit 110, a reception unit 120, a setting unit 130, and a control unit 140. The functional configuration illustrated in Fig. 22 is merely an example. As long as the operation according to the embodiment of the present invention can be executed, the functional classification and the name of a functional unit may be freely determined.

The transmitting unit 110 has a function of generating a signal to be transmitted to the terminal 20 side and wirelessly transmitting the signal. The reception unit 120 has a function of receiving various signals transmitted from the terminal 20 and acquiring, for example, information of a higher layer from the received signals. In addition, the transmitting unit 110 has a function of transmitting NR-PSS, NR-SSS, NR-PBCH, a DL/UL control signal, a DL reference signal, and the like to the terminal 20.

The setting unit 130 stores setting information set in advance and various types of setting information to be transmitted to the terminal 20 in the storage device, and reads the various types of setting information from the storage device as necessary. A content of the setting information is, for example, information related to the setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmitting unit 110. Furthermore, the control unit 140 receives information on HARQ responses of the D2D communication and the DL communication from the terminal 20 via the reception unit 120. A functional unit related to signal transmission in the control unit 140 may be included in the transmitting unit 110, and a functional unit related to signal reception in the control unit 140 may be included in the reception unit 120.

### <Terminal 20>

Fig. 23 is a diagram illustrating an example of a functional configuration of the terminal 20. As illustrated in Fig. 23, the terminal 20 includes a transmitting unit 210, a reception unit 220, a setting unit 230, and a control unit 240. The functional configuration illustrated in Fig. 23 is merely an example. As long as the operation according to the embodiment of the present invention can be executed, the functional classification and the name of a functional unit may be freely determined.

The above-described LTE-SL transmission/reception mechanism (module) and the above-described NR-SL transmission/reception mechanism (module) may separately include the transmitting unit 210, the reception unit 220, the setting unit 230, and the control unit 240.

The transmitting unit 210 generates a transmission signal from transmission data and wirelessly transmits the transmission signal. The reception unit 220 wirelessly receives various signals and acquires a signal of a higher layer from the received signals of a physical layer. Furthermore, the reception unit 220 has a function of receiving NR-PSS, NR-SSS, NR-PBCH, a DL/UL/SL control signal or reference signal, or the like transmitted from the base station 10. Furthermore, for example, the transmitting unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as D2D communication, and the reception unit 220 receives the PSCCH, the PSSCH, the PSDCH, the PSBCH, or the like from the other terminal 20.

The setting unit 230 stores various types of setting information received from the base station 10 or the terminal 20 by the reception unit 220 in the storage device, and reads the various types of setting information from the storage device as necessary. The setting unit 230 also stores setting information set in advance. A content of the setting information is, for example, information related to the setting of the D2D communication.

As described in the embodiment, the control unit 240 controls the D2D communication for establishing RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information related to HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from the resource selection window based on a result of sensing, or may execute reevaluation or pre-emption. Furthermore, the control unit 240 performs processing related to power saving in transmission and reception of the D2D communication. Furthermore, the control unit 240 performs processing related to inter-terminal cooperation in the D2D communication. A functional unit related to signal transmission in the control unit 240 may be included in the transmitting unit 210, and a functional unit related to signal reception in the control unit 240 may be included in the reception unit 220.

### (Hardware Configuration)

The block diagrams (Figs. 22 and 23) used for the description of the above embodiment illustrate blocks of functional units. These functional blocks (configuration units) are realized by any combination of at least one of hardware or software. A method of implementing each functional block is not particularly limited. That is, each functional block may be realized by using one physically or logically combined device, or may be realized by directly or indirectly (for example, by using wired, wireless, or the like) connecting two or more physically or logically separated devices and using a plurality of these devices. The functional block may be realized by combining software with the one device or the plurality of devices.

The functions include, but are not limited to, determining, judging, calculating, computing, processing, deriving, investigating, searching, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, assigning, and the like. For example, a functional block (a configuration unit) that causes transmission to function is referred to as a transmitting unit or a transmitter. In any case, as described above, the implementation method is not particularly limited.

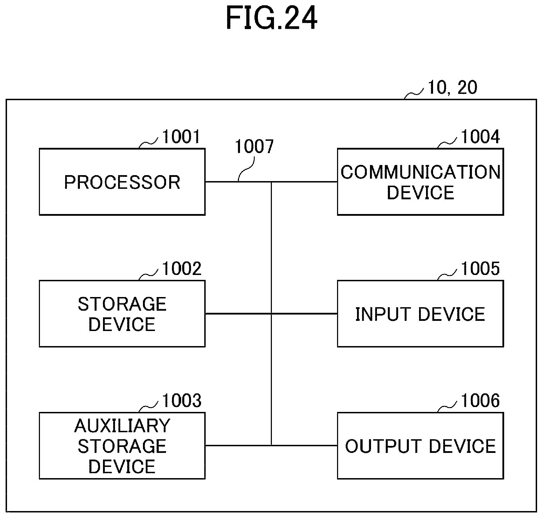

For example, the base station 10, the terminal 20, and the like in the embodiment of the present disclosure may function as a computer that performs processing of the wireless communication method of the present disclosure. Fig. 24 is a diagram illustrating an example of a hardware configuration of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configuration of the base station 10 and the terminal 20 may be configured to include one or a plurality of devices illustrated in the drawing, or may be configured without including some devices.

Each function in the base station 10 and the terminal 20 is implemented by the processor 1001 performing operation by loading predetermined software (a program) on hardware such as the processor 1001 and the storage device 1002, controlling communication by the communication device 1004, and controlling at least one of reading or writing of data in the storage device 1002 and the auxiliary storage device 1003.

The processor 1001 operates, for example, an operating system to control the entire computer. The processor 1001 may be configured with a central processing unit (CPU) including an interface with a peripheral device, a control device, an arithmetic device, a register, and the like. For example, the control unit 140, the control unit 240, and the like described above may be realized by the processor 1001.

In addition, the processor 1001 reads a program (a program code), a software module, data, or the like from at least one of the auxiliary storage device 1003 or the communication device 1004 to the storage device 1002, and executes various types of processing according to the data. As the program, a program that causes a computer to execute at least a part of the operations described in the above-described embodiments is used. For example, the control unit 140 of the base station 10 illustrated in Fig. 22 may be realized by a control program stored in the storage device 1002 and operated by the processor 1001. Furthermore, for example, the control unit 240 of the terminal 20 illustrated in Fig. 23 may be realized by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be mounted by one or more chips. It is noted that the program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), or the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, or the like. The above-described storage medium may be, for example, a database including at least one of the storage device 1002 or the auxiliary storage device 1003, a server, or another appropriate medium.

The communication device 1004 is hardware (a transmission/reception device) for performing communication between computers via at least one of a wired network or a wireless network, and is also referred to as, for example, a network device, a network controller, a network card, a communication module, or the like. The communication device 1004 may be configured with a high-frequency switch, a duplexer, a filter, a frequency synthesizer, and the like in order to implement, for example, at least one of frequency division duplex (FDD) or time division duplex (TDD). For example, a transmission/reception antenna, an amplifier unit, a transmission/reception unit, a transmission/reception path interface, and the like may be realized by the communication device 1004. The transmission/reception unit may be physically or logically separated between the transmitting unit and the reception unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that executes an output to the outside. It is noted that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured with hardware such as a microprocessor, a digital signal processor (DSP), an application specific integrated circuit (ASIC), a programmable logic device (PLD), or a field programmable gate array (FPGA), and some or all of the functional blocks may be realized by the hardware. For example, the processor 1001 may be mounted using at least one of these pieces of hardware.

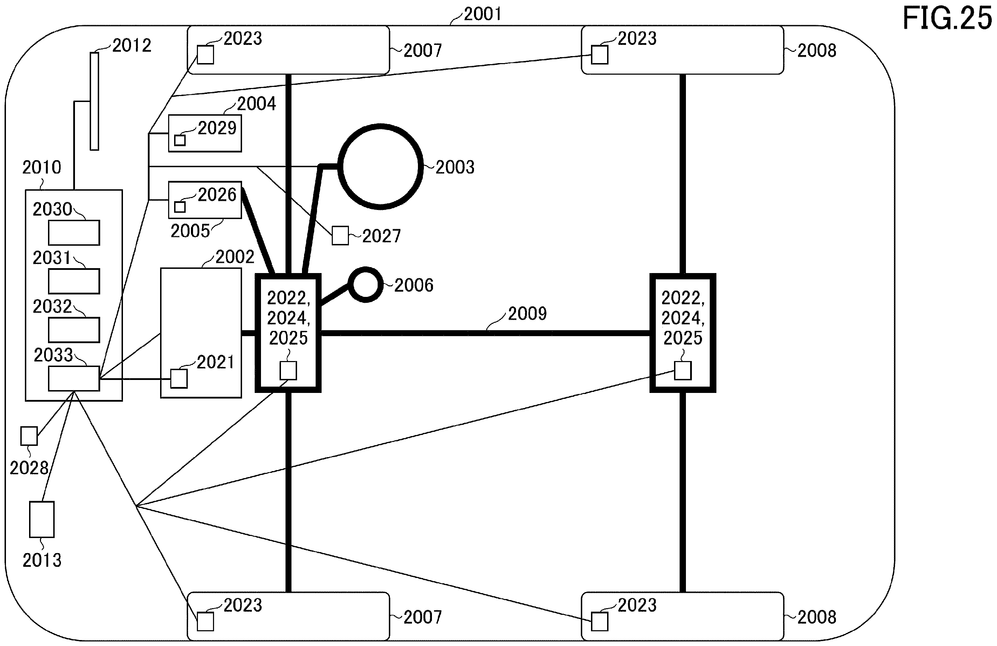

Fig. 25 illustrates a configuration example of a vehicle 2001. As illustrated in Fig. 25, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel or the rear wheel based on an operation of the steering wheel operated by a user.

The electronic control unit 2010 includes a microprocessor 2031, a memory (ROM, RAM) 2032, and a communication port (IO port) 2033. Signals from the various sensors 2021 to 2029 provided in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses a current of a motor, a rotation speed signal of a front wheel and a rear wheel acquired by the rotation speed sensor 2022, an air pressure signal of a front wheel and a rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 includes various devices for providing (outputting) various types of information such as driving information, traffic information, and entertainment information, such as a car navigation system, an audio system, a speaker, a television, and a radio, and one or more ECUs that control these devices. The information service unit 2012 provides various kinds of multi-media information and multi-media services to an occupant in the vehicle 2001 using information acquired from an external device via the communication module 2013 or the like. The information service unit 2012 may include an input device (for example, a keyboard, a mouse, a microphone, a switch, a button, a sensor, a touch panel, or the like) that receives an input from the outside, or may include an output device (for example, a display, a speaker, an LED lamp, a touch panel, or the like) that executes an output to the outside.

A driving assistance system unit 2030 includes various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs for controlling these devices. The driving assistance system unit 2030 also transmits and receives various types of information via the communication module 2013, thereby achieving a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device that can be controlled by the microprocessor 2031 of the electronic control unit 2010 and can communicate with an external device. For example, various types of information are transmitted and received to and from an external device via wireless communication. The communication module 2013 may be provided in the inside or outside of the electronic control unit 2010. The external device may be, for example, a base station, a mobile station, or the like.

The communication module 2013 may transmit at least one of the above-described signals from the various sensors 2021 to 2028 input to the electronic control unit 2010, information obtained based on the signals, or information based on an input from the outside (user) obtained via the information service unit 2012 to the external device via wireless communication. The electronic control unit 2010, the various sensors 2021 to 2028, the information service unit 2012, and the like may be referred to as input units that receive inputs. For example, the PUSCH transmitted by the communication module 2013 may include information based on the input.

The communication module 2013 receives various types of information (traffic information, signal information, inter-vehicle information, and the like) transmitted from the external device, and displays the information on the information service unit 2012 provided in the vehicle 2001. The information service unit 2012 may be referred to as an output unit that outputs information (for example, information is output to a device such as a display or a speaker based on a PDSCH (or data/information decoded from the PDSCH) received by the communication module 2013). The communication module 2013 also stores various types of information received from the external devices in the memory 2032 available by the microprocessor 2031. The microprocessor 2031 may control, based on the information stored in the memory 2032, the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001.

### (Summary of Embodiments)

As described above, according to the embodiment of the present invention, there is provided a terminal including: a reception unit configured to receive, from a first terminal, a signal requesting position information of the terminal in inter-terminal direct communication; and a transmitting unit configured to transmit, to a second terminal, a signal related to position measurement in the inter-terminal direct communication, wherein the reception unit receives, from the second terminal, a signal that is obtained based on the signal related to the position measurement in the inter-terminal direct communication, and the transmitting unit transmits, to the first terminal, the position information of the terminal obtained based on the signal that is obtained based on the signal related to the position measurement in the inter-terminal direct communication.

According to the configuration, a terminal 20 can acquire the position information of another terminal using a sidelink signal. In addition, the terminal 20 transmits and receives a report at a timing before latency bound by using the sidelink signal, thereby making it possible to acquire the position information of another terminal by a necessary timing. That is, it is possible to acquire the position information of another terminal by inter-terminal direct communication

The transmitting unit may transmit, to the first terminal, an expiration date together with the position information of the terminal. According to the configuration, the terminal 20 can acquire the position information of another terminal, the reliability of which can be evaluated, using the sidelink signal.

The transmitting unit may transmit, to the first terminal, the position information of the terminal from a time point at which the reception unit receives the signal requesting the position information to a first time point. According to the configuration, the terminal 20 transmits and receives a report at a timing before latency bound by using the sidelink signal, thereby making it possible to acquire the position information of another terminal by a necessary timing.

When the reception unit receives the signal that is obtained based on the signal related to the position measurement in the inter-terminal direct communication by a second time point earlier than the first time point, the transmitting unit may transmit, to the first terminal, the position information of the terminal obtained based on the signal that is obtained based on the signal related to the position measurement in the inter-terminal direct communication. According to the configuration, the terminal 20 transmits and receives a report at a timing before latency bound by using the sidelink signal, thereby making it possible to acquire the position information of another terminal by a necessary timing.

When the reception unit does not receive the signal that is obtained based on the signal related to the position measurement in the inter-terminal direct communication by a second time point earlier than the first time point, the transmitting unit may stop an operation of transmitting, to the first terminal, the position information of the terminal obtained based on the signal that is obtained based on the signal related to the position measurement in the inter-terminal direct communication. According to the configuration, the terminal 20 transmits and receives a report at a timing before latency bound by using the sidelink signal, thereby making it possible to acquire the position information of another terminal by a necessary timing.

Furthermore, according to the embodiment of the present invention, there is provided a communication method performed by a terminal, the communication method including: a reception procedure of receiving, from a first terminal, a signal requesting position information of the terminal in inter-terminal direct communication; a transmission procedure of transmitting, to a second terminal, a signal related to position measurement in the inter-terminal direct communication; a procedure of receiving, from the second terminal, a signal that is obtained based on the signal related to the position measurement in the inter-terminal direct communication; and a procedure of transmitting, to the first terminal, the position information of the terminal obtained based on the signal that is obtained based on the signal related to the position measurement in the inter-terminal direct communication.

According to the configuration, the terminal 20 can acquire the position information of another terminal using a sidelink signal. In addition, the terminal 20 transmits and receives a report at a timing before latency bound by using the sidelink signal, thereby making it possible to acquire the position information of another terminal by a necessary timing. That is, it is possible to acquire the position information of another terminal by inter-terminal direct communication

### (Supplement to Embodiment)

Although the embodiments of the present invention have been described above, the disclosed invention is not limited to such embodiments, and those skilled in the art will understand various modifications, modifications, alternatives, substitutions, and the like. Although the description has been given using specific numerical examples to facilitate understanding of the invention, these numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operation of the plurality of functional units may be physically performed by one component, or the operation of one functional unit may be physically performed by a plurality of components. Regarding a processing procedure described in the embodiments, the order of the processing may be changed as long as there is no contradiction. For convenience of processing description, the base station 10 and the terminal 20 have been described using a functional block diagram, but such a device may be realized by hardware, software, or a combination thereof. The software operated by the processor included in the base station 10 according to the embodiments of the present invention and the software operated by the processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the notification of information is not limited to the aspects/embodiments described in the present disclosure, and may be performed using other methods. For example, the notification of information may be performed by physical layer signaling (for example, downlink control information (DCI) and uplink control information (UCI)), higher layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or any other appropriate system, or a next generation system that is extended, modified, generated, or stipulated based thereon. Further, a plurality of systems may be applied in combination (for example, a combination of at least one of LTE or LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or a plurality of network nodes having the base station 10, it is obvious that various operations performed for communication with the terminal 20 may be performed by at least one of the base station 10 or any other network node (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) or a wireless technology (infrared rays, microwaves, and the like), at least one of the wired technology or the wireless technologiy is included within the definition of the transmission medium.

The pieces of information, signals, and the like described in the present disclosure may be represented using any one of a variety of different techniques. For example, data, an instruction, a command, information, a signal, a bit, a symbol, a chip, and the like that may be mentioned throughout the above description may be represented by a voltage, a current, an electromagnetic wave, a magnetic field or a particle, an optical field or a photon, or any combination thereof.

It is noted that the terms described in the present disclosure and the terms necessary for understanding the present disclosure may be replaced with terms having the same or similar meanings. For example, at least one of the channel or the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, the information, the parameter, and the like described in the present disclosure may be represented using an absolute value, may be represented using a relative value from a predetermined value, or may be represented using another corresponding information. For example, a radio resource may be indicated by an index.

The names used for the parameters described above are not limited in any respect. Furthermore, mathematical formulas and the like using these parameters may be different from those explicitly disclosed in the present disclosure. Since various channels (for example, PUCCH, PDCCH, and the like) and information elements can be identified by any suitable name, various names assigned to these various channels and information elements are not in any way limitative names.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femtocell, a picocell, or the like.

The base station may accommodate one or a plurality of (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station or the base station subsystem that performs a communication service in this coverage.

In the present disclosure, a state indicating that the base station transmits information to the terminal may be replaced with a state indicating that the base station instructs the terminal to perform control and operation based on the information.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable term.

At least one of the base station or the mobile station may be referred to as a transmission device, a reception device, a communication device, or the like. It is noted that at least one of the base station or the mobile station may be a device mounted on a mobile object, the mobile object itself, or the like. The mobile object refers to a movable object, and a moving speed thereof is any moving speed. In addition, a case in which the mobile object is stopped is naturally included. The mobile object includes, for example, a vehicle, a transport vehicle, an automobile, a motorcycle, a bicycle, a connected car, an excavator, a bulldozer, a wheel loader, a dump truck, a forklift, a train, a bus, a rear car, a human-powered vehicle, a ship and other watercraft, an airplane, a rocket, an artificial satellite, a drone (registered trademark), a multi-copter, a quadcopter, a balloon, and objects mounted thereon, and the present invention is not limited thereto. Further, the mobile object may be a mobile object that autonomously travels based on an operation command. The mobile object may be a vehicle (for example, a car, an airplane, or the like), a mobile object that is movable without human intervention (for example, a drone, a self-driving vehicle, or the like), or a robot (manned type or unmanned type). It is noted that at least one of the base station or the mobile station includes a device that does not necessarily move during the communication operation. For example, at least one of the base station or the mobile station may be an Internet of Things (IoT) device such as a sensor.

In addition, the base station in the present disclosure may be replaced with the user terminal. For example, each aspect/embodiment of the present disclosure may be applied to a configuration in which communication between a base station and the user terminal is replaced with communication between a plurality of terminals 20 (for example, may be referred to as device-to-device (D2D), vehicle-to-everything (V2X), or the like). In this case, the terminal 20 may have a function of the base station 10 described above. In addition, words such as "upstream" and "downstream" may be replaced with words corresponding to inter-terminal communication (for example, "side"). For example, an uplink channel, a downlink channel, and the like may be replaced with a side channel.

Similarly, the user terminal in the present disclosure may be replaced with the base station. In this case, the base station may have a function of the user terminal described above.

The term "determining" used in the present disclosure may encompass a wide variety of actions. The term "determining" may include, for example, a case in which "judging", "calculating", "computing", "processing", "deriving", "investigating", "looking up, searching, inquiring" (for example, looking up in a table, a database, or another data structure), and "ascertaining" is deemed as "determining". Furthermore, the term "determining" may include a case in which "receiving" (for example, receiving information), "transmitting" (for example, transmitting information), "inputting", "outputting", or "accessing" (for example, accessing data in a memory) is deemed as "determining". In addition, the term "determining" may include a case in which "resolving", "selecting", "choosing", "establishing", "comparing", or the like is deemed as "determining". That is, the "determining"" may include a case in which a certain action or operation is deemed as "determining". Further, "determining" may be replaced with "assuming", "expecting", "considering", or the like.

The terms "connected", "coupled", or any variation thereof, mean any direct or indirect connection or coupling between two or more elements, and can include the presence of one or more intermediate elements between two elements that are "connected" to each other or "coupled" to each other. The coupling or connection between the elements may be physical, logical, or a combination thereof. For example, "connection" may be replaced with "access". As used in this disclosure, two elements can be considered to be "connected" or "coupled" to each other using at least one of one or more wires, cables, or printed electrical connections, and as some non-limiting and non-inclusive examples, using electromagnetic energy having wavelengths in a radio frequency domain, a microwave region, and a light (both visible and invisible) region, and the like.

The reference signal may be abbreviated as RS (reference signal), or may be referred to as a pilot according to an applied standard.

As used in this disclosure, the phrase "based on" does not mean "based only on", unless explicitly stated otherwise. In other words, the description "based on" means both "based only on" and "based at least on".

Any reference to elements using designations such as "first" and "second" as used in the present disclosure does not generally limit the amount or order of those elements. These designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, these terms are intended to be inclusive in a manner similar to the term "comprising". Furthermore, the term "or" used in the present disclosure is intended not to be an exclusive OR.

A radio frame may be configured with one or a plurality of frames in a time domain. Each of the one or a plurality of frames in the time domain may be referred to as a sub-frame. The sub-frame may further be configured with one or a plurality of slots in the time domain. The sub-frame may be a fixed time length (for example, 1 ms) that is independent of numerology.

Numerology may be a communication parameter applied to at least one of transmission or reception of a signal or a channel. Numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, or the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on numerology.

The slot may include a plurality of mini-slots. Each mini-slot may be configured with one or a plurality of symbols in the time domain. Further, the mini-slot may be referred to as a sub-slot. The mini-slot may be configured with a smaller number of symbols than the slot. A PDSCH (or PUSCH) transmitted in a time unit larger than the mini-slot may be referred to as a PDSCH (or PUSCH) mapping type A. A PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame or the TTI may be a sub-frame (1 ms) in existing LTE, a period of time shorter than 1 ms (for example, 1 to 13 symbols), or a period of time longer than 1 ms. It is noted that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. It is noted that the definition of the TTI is not limited thereto.

The TTI may be a transmission time unit such as a channel coded data packet (a transport block), a code block, or a code word, or may be a processing unit such as scheduling or link adaptation. It is noted that, when a TTI is given, a time interval (for example, the number of symbols) in which the transport block, the code block, the code word, and the like are actually mapped may be shorter than the TTI.

It is noted that, when one slot or one mini-slot is referred to as the TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI with a time length of 1 ms may be referred to as a general TTI (TTI in LTE Rel.8-12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

It is noted that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and equal to or greater than 1 ms.

The resource block (RB) is a resource allocation unit in the time domain and the frequency domain, and may include one or a plurality of consecutive sub-carriers in the frequency domain. The number of sub-carriers included in the RB may be the same regardless of numerology, for example, may be 12. The number of sub-carriers included in the RB may be determined based on numerology.

In addition, the time domain of the RB may include one or a plurality of symbols, and may be a length of one slot, one mini-slot, one sub-frame, or one TTI. Each of one TTI, one sub-frame, and the like may be configured with one or a plurality of resource blocks.

It is noted that one or a plurality of RBs may be referred to as a physical resource block (physical RB, PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as a partial bandwidth or the like) may represent a subset of contiguous common resource blocks (RBs) for numerology in a certain carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be configured in one carrier for the terminal 20.

At least one of the configured BWPs may be active, and the terminal 20 may not assume that a predetermined signal/channel is transmitted and received outside the active BWPs. It is noted that "cell", "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per sub-frame or radio frame, the number of mini-slots included in the slot, the number of symbols and RBs included in the slot or mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following these articles is a plural form.

In the present disclosure, the term "A and B are different" may mean "A and B are different from each other". It is noted that the term may mean that "A and B are different from C". Terms such as "separated from" and "coupled to" may be interpreted in the same manner as "different".

Each aspect/embodiment described in the present disclosure may be used alone, or may be used in combination, or may be used by being switched with execution. Furthermore, notification of predetermined information (for example, notification of "being X") is not limited to being performed explicitly, and may be performed implicitly (for example, the predetermined information is not notified).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, the description of the present disclosure is given for the purpose of illustration and does not have any restrictive meaning to the present disclosure.

### Reference Signs List

- 10: Base station
- 110: Transmitting unit
- 120: Reception unit
- 130: Setting unit
- 140: Control unit
- 20: Terminal
- 210: Transmitting unit
- 220: Reception unit
- 230: Setting unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM, RAM)
- 2033: Communication port (IO port)

## Claims

1. A terminal comprising:
a reception unit configured to receive, from a first terminal, a signal requesting position information of the terminal in inter-terminal direct communication; and
a transmitting unit configured to transmit, to a second terminal, a signal related to position measurement in the inter-terminal direct communication, wherein
the reception unit receives, from the second terminal, a signal that is obtained based on the signal related to the position measurement in the inter-terminal direct communication, and
the transmitting unit transmits, to the first terminal, the position information of the terminal obtained based on the signal that is obtained based on the signal related to the position measurement in the inter-terminal direct communication.

2. The terminal according to claim 1, wherein the transmitting unit transmits, to the first terminal, an expiration date together with the position information of the terminal.

3. The terminal according to claim 1, wherein the transmitting unit transmits, to the first terminal, the position information of the terminal from a time point at which the reception unit receives the signal requesting the position information to a first time point.

4. The terminal according to claim 3, wherein
when the reception unit receives the signal that is obtained based on the signal related to the position measurement in the inter-terminal direct communication by a second time point earlier than the first time point,
the transmitting unit transmits, to the first terminal, the position information of the terminal obtained based on the signal that is obtained based on the signal related to the position measurement in the inter-terminal direct communication.

5. The terminal according to claim 3, wherein
when the reception unit does not receive the signal that is obtained based on the signal related to the position measurement in the inter-terminal direct communication by a second time point earlier than the first time point,
the transmitting unit stops an operation of transmitting, to the first terminal, the position information of the terminal obtained based on the signal that is obtained based on the signal related to the position measurement in the inter-terminal direct communication.

6. A positioning method performed by a terminal, the positioning method comprising:
a reception procedure of receiving, from a first terminal, a signal requesting position information of the terminal in inter-terminal direct communication;
a transmission procedure of transmitting, to a second terminal, a signal related to position measurement in the inter-terminal direct communication;
a procedure of receiving, from the second terminal, a signal that is obtained based on the signal related to the position measurement in the inter-terminal direct communication; and
a procedure of transmitting, to the first terminal, the position information of the terminal obtained based on the signal that is obtained based on the signal related to the position measurement in the inter-terminal direct communication.
